# EUROPÄISCHE PATENTSCHRIFT

(11) **EP 2 664 394 B1**
(45) Veröffentlichungstag und Bekanntmachung des Hinweises auf die Patenterteilung: **11.06.2014**
(21) Anmeldenummer: 13165130.9
(22) Anmeldetag: 24.04.2013
(51) Int. Cl.: B21D 39/03, F16B 5/04, B29C 65/64

(54) **Verfahren zum Clinchen von zwei duktilen Bauteilen mit einem nicht-duktilen Bauteil**
Method for clinching two ductile components with a non ductile component
Procédé de clinchage de deux composants ductiles avec un composant non ductile

(30) Priorität: 16.05.2012 DE 102012208165
(43) Veröffentlichungstag der Anmeldung: 20.11.2013
(73) Patentinhaber: Bayerische Motoren Werke Aktiengesellschaft, 80809 München (DE)
(72) Erfinder: Gschneidinger, Rainer, 94563 Otzing (DE); Kiefer, Manuel, 85088 Vohburg (DE)

(56) Entgegenhaltungen:
- DE-A1- 19 929 377
- DE-B3- 10 248 551
- DE-B3- 10 318 131

## Beschreibung

Die vorliegende Erfindung betrifft ein Verfahren zum Clinchen von drei Bauteilen mittels einer Clinchvorrichtung, aufweisend einen Setzstempel und eine Matrize, die einen Amboss mit einer Aussparung, in die der Setzstempel eingeführt werden kann, aufweist. Solch ein Verfahren ist z.B. in der DE-A-199 29 377 offenbart.

Das Aneinanderfügen von zwei gleichartigen Bauteilen ist vielfach bekannt. Dies kann auf verschiedenste Art und Weise, beispielsweise durch Kleben, Schweißen, Verschrauben oder Nieten, erfolgen. Schwieriger ist das dauerhafte Verbinden von Bauteilen aus unterschiedlichen Materialien, insbesondere von duktilen Bauteilen mit nicht-duktilen Bauteilen.

Aktuell werden sogenannte Mischbauverbindungen aus Stahl oder Alu und WU-Stahl oder Faserverbundwerkstoffen, insbesondere Faserverbundkunststoffen (FVK), mithilfe von Strukturklebstoffen oder Hilfsfügeelementen, wie beispielsweise Nieten oder Schrauben, dauerfest miteinander verbunden. Nachteilig hierbei sind die Elementekosten der Hilfsfügeelemente, beispielsweise von Halbhohlstanznieten, Blindnieten, Vollstanznieten, Klebstoffen, Schrauben, etc.. Des Weiteren weisen diese Hilfsfügeelemente teilweise ein nicht geringes Gewicht auf, so dass der Fügeverbund durch die Hilfsfügeelemente ein höheres Gesamtgewicht erhält, als ohne die Fügehilfselemente. Ein Fügehilfselement kann ferner die Korrosionsanfälligkeit der Verbindung erhöhen, da zum Beispiel bei einer Verbindung von Aluminium und Kohlenfaserkunststoff (CFK) ein Stahl-Niet eingebracht wird und somit die elektrochemische Spannungsreihe erweitert wird. Das heißt, zu den zwei bereits vorhandenen Fügepartnern wird nachteiligerweise noch ein dritter Werkstoff, insbesondere metallischer Werkstoff, eingebracht.

Ein bekanntes Fügeverfahren, das ohne Fügehilfselemente auskommt, ist das "Clinchen", was auch als "Durchsetzfügen" bezeichnet wird. Aus dem Stand der Technik sind eine Vielzahl von Vorrichtungen und Verfahren zum Clinchen von Bauteilen, insbesondere von Blechen, bekannt. Die DE-B-103 18 131 offenbart die Herstellung von Drei-Blech-Verbindungen mittels zweier Clinchstempel.

Bei einer Vielzahl von Clinchvorrichtungen ist eine Matrize mit einer Kavität vorgesehen, die mit einer Stempelvorrichtung zusammenwirkt, durch welche beispielsweise Material von zwei zu verbindenden Blechteilen an der Clinchstelle in die Kavität verdrängt wird. Aktuell wird im Stand der Technik im 2-Blech Verbund oder 3-Blech Verbund geclincht, wobei alle Bauteile duktil ausgebildet sind (siehe die DE-A-19929377) Herkömmliches Clinchen von Bauteilen aus nicht-duktilen Material ist nicht möglich.

Aufgrund des immer bedeutender werdenden Mischbaus werden neue Wege in der kalten Fügetechnik gesucht. Derzeit kann aber bei den bekannten Clinchverfahren keine Verbindung eines Bauteils aus Stahl oder Alu mit einem Bauteil aus kohlenstofffaserverstärktem Kunststoff (CFK), glasfaserverstärktem Kunststoff (GFK) oder WU-Stahl, wie beispielsweise HC1000W, gefügt werden. Unedle Fügepartner sind jedoch korrosionsanfällig, wenn sie mit korrosiven Medien, wie Luft oder Wasser, in Verbindung kommen.

Es ist daher Aufgabe der vorliegenden Erfindung, ein Verfahren zum Clinchen eines duktilen Bauteils mit zwei nicht-duktilen Bauteilen zu schaffen, dass auf eine einfache und kostengünstige Art und Weise eine dauerhaft feste Verbindung der Bauteile ermöglicht, insbesondere eine Beschädigung beziehungsweise eine Zerstörung der nicht-duktilen Bauteile vermeidet.

Voranstehende Aufgabe wird gelöst durch ein Verfahren zum Clinchen von zwei duktilen Bauteilen mit einem nicht-duktilen Bauteil mit den Merkmalen gemäß Anspruch 1. Weitere Merkmale und Details der Erfindung ergeben sich aus den Unteransprüchen, der Beschreibung und den Zeichnungen.

Die Aufgabe der Erfindung wird durch ein Verfahren zum Clinchen von drei Bauteilen mittels einer Clinchvorrichtung, aufweisend einen Setzstempel und eine Matrize, die einen Amboss mit einer Aussparung, in die der Setzstempel eingeführt werden kann, aufweist, gelöst. Das stempelseitige Bauteil und das matrizenseitige Bauteil weisen jeweils ein duktiles Material und das mittlere Bauteil ein nicht-duktiles Material auf, wobei das mittlere Bauteil ein Vorloch aufweist, durch das der Setzstempel hindurchgeführt werden kann. Das Verfahren ist durch folgende Verfahrensschritte gekennzeichnet:
- die drei Bauteile werden aneinandergelegt, wobei das mittlere Bauteil, in dem das Vorloch ist, zwischen dem stempelseitigen Bauteil und dem matrizenseitigen Bauteil angeordnet wird,
- der Setzstempel der Vorrichtung wird in Richtung des matrizenseitigen Bauteils bewegt und zieht einen Bereich des stempelseitigen Bauteils durch das Vorloch des mittleren Bauteils bis der mitgezogene Bereich gegen das matrizenseitige Bauteil gepresst wird,
- der Setzstempel wird weiter in Richtung der Aussparung des Amboss bewegt und zieht den Bereich des stempelseitigen Bauteils sowie einen Bereich des matrizenseitigen Bauteils in die Aussparung bis die mitgezogenen Bereiche durch den Setzstempel an eine Anschlagfläche in der Aussparung des Amboss gepresst werden und ein Teil des mitgezogenen Bereichs des stempelseitigen Bauteils und ein Teil des mitgezogenen Bereichs des matrizenseitigen Bauteils aufgrund des Anpressens an die Anschlagfläche radial nach außen gedrückt werden, bis der Teil des mitgezogenen Bereichs des stempelseitigen Bauteils das matrizenseitige Bauteil hinterschneidet.

Durch ein derartiges Verfahren ist es auf eine einfache und kostengünstige Art und Weise möglich zwei Bauteile, die jeweils aus einem duktilen Material ausgebildet sind, mit einem Bauteil, das aus einem nicht-duktilen Material ausgebildet ist, dauerhaft feste miteinander zu verbinden. Dabei wird das nicht-duktile Bauteil sandwichmäßig zwischen die beiden duktilen Bauteile geklemmt. Dadurch kann eine Beschädigung beziehungsweise eine Zerstörung des nicht-duktilen Bauteils vermieden werden.

Das nicht-duktile Bauteil, welches aus einem Faserverbundwerkstoff, insbesondere einem Faserverbundkunststoff, wie kohlenstofffaserverstärktem oder glasfaserverstärktem Kunststoff ausgebildet ist, wird zwischen das stempelseitige Bauteil und das matrizenseitige Bauteil, welche jeweils aus einem duktilen Material, wie beispielsweise Stahl oder Aluminium ausgebildet sind, gelegt.

Mittels des Setzstempels, der auch als Fügestempel bezeichnet werden kann, werden Bereiche des stempelseitigen Bauteils und des matrizenseitigen Bauteils in die Aussparung des Amboss der Matrize hineingezogen, wobei die Bereiche sich derart verformen, dass eine Hinterschneidung eines Teils des Bereiches des stempelseitigen Bauteils mit einem Bereich des matrizenseitigen Bauteils ausgebildet wird. Das heißt, ein Teil des Bereiches des stempelseitigen Bauteils hinterschneidet zum Ende des Clinchvorgangs einen Bereich des matrizenseitigen Bauteils und stellt so eine kraft- und formschlüssige Verbindung zwischen den Bauteilen her. Dabei wird das mittlere Bauteil zwischen den beiden äußeren Bauteilen verklemmt.

Zum Beginn des Verfahrens, das heißt des Clinchvorgangs, wird der Setzstempel der Vorrichtung in Richtung des matrizenseitigen Bauteils bewegt. Dabei zieht er einen Bereich des stempelseitigen Bauteils durch das Vorloch des mittleren Bauteils bis der mitgezogene Bereich gegen das matrizenseitige Bauteil gepresst wird. Anschließend wird der Setzstempel weiter in Richtung der Aussparung des Amboss bewegt, wobei er sowohl den Bereich des stempelseitigen Bauteils als auch einen Bereich des matrizenseitigen Bauteils in die Aussparung mitzieht, bis die mitgezogenen Bereiche an eine Anschlagfläche in der Aussparung des Amboss, beispielsweise gegen den Boden der Aussparung oder eine Anschlagfläche eines Vorsprungs in der Aussparung, gepresst werden. Der Setzstempel wird solange in Richtung der Anschlagfläche bewegt, bis ein Teil des mitgezogenen Bereichs des stempelseitigen Bauteils und ein Teil des mitgezogenen Bereichs des matrizenseitigen Bauteils aufgrund des Anpressens an die Anschlagfläche radial nach außen gedrückt werden und der Teil des mitgezogenen Bereichs des stempelseitigen Bauteils das matrizenseitige Bauteil hinterschneidet.

Das heißt, das stempelseitige duktile Material wird mittels des Setzstempels durch das Vorloch des nicht-duktilen Materials in das matrizenseitige duktile Material gedrückt. Durch den Setzstempel und die Matrizenform ergibt sich zu Ende des Clinchvorgangs eine Hinterschneidung der beiden duktilen Materialien und somit eine Verbindungsfestigkeit. Das nicht duktile Material in der Zwischenlage wird zwischen den beiden duktilen Materialien geklemmt. Der Clinchpunkt ist gas- und wasserdicht. Es kann kein externes Medium, wie beispielsweise Luft oder Wasser, an die Fügestelle zwischen dem mittleren Bauteil und den beiden äußeren Bauteilen gelangen. Das bedeutet, das stempelseitige Bauteil schützt die Fügestelle von der einen Seite, das matrizenseitige Bauteil schützt die Fügestelle von der anderen Seite. Somit ist die Korrosionsgefahr an der Fügestelle minimiert.

Die Lochfindung des mittleren nicht-duktilen Materials ist bei einer automatisierten Anwendung relativ einfach, da der Clinchpunkt nur mit dem stempel- und matrizenseitigen Material gefügt wird und das mittellagige Bauteil nur geklemmt wird. Das Vorloch des mittleren Bauteils und der Setzstempel sind derart aufeinander abgestimmt, dass der Setzstempel durch das Vorloch zusammen mit einem Bereich des stempelseitigen Bauteils hindurchgeführt werden kann. Vorzugsweise ist die Querschnittsfläche des Vorlochs zumindest etwas größer als die Querschnittsfläche des Setzstempels. Vorteilhafterweise ist die Querschnittsfläche des Vorlochs jedoch deutlich größer als die des Stempels, da dann eine besonders einfache Lochfindung möglich ist. Je kleiner das Vorloch, desto genauer müssen Stempel und Matrize positioniert werden.

Bevorzugt sind die Aussparung des Amboss und das Vorloch des mittleren Bauteils kreiszylinderförmig ausgebildet. Der Setzstempel ist konzentrisch zur Aussparung des Amboss angeordnet und kann koaxial zur Längsachse der Aussparung in diese hineinbewegt werden. Besonders bevorzugt ist der Durchmesser des Vorlochs des mittleren Bauteils mindestens einen Millimeter, bevorzugt mindestens 4-10 Millimeter, größer als der Durchmesser der Aussparung. Hierdurch ist sichergestellt, dass der Setzstempel einen Bereich des stempelseitigen Materials durch das Vorloch des mittleren Bauteils ziehen kann, ohne dass das mittlere Bauteil beschädigt wird. Vorteilhafterweise sind der Setzstempel und das Vorloch des mittleren Bauteils derart aufeinander abgestimmt, dass beim Clinchvorgang das mitgezogene Material des stempelseitigen Bauteils das Vorloch des mittleren Bauteils nicht kontaktiert.

Vorteilhaft bei dem Verfahren ist, dass das Vorloch deutlich größer gewählt werden kann als der Setzstempel und die Aussparung des Amboss der Matrize. Da das mittlere Bauteil lediglich zwischen den beiden anderen Bauteilen eingeklemmt wird, kann das Vorloch deutlich größer gewählt werden, als der Durchmesser des Setzstempels und der Aussparung. Hierdurch kann die sogenannte Delta-Alpha Problematik, das heißt die Problematik der unterschiedlichen Längenausdehnung der verschiedenen Materialien, wie zum Beispiel Stahl zu kohlenstofffaserverstärktem Kunststoff, aufgefangen werden. Insbesondere ist bei einem großen Vorloch eine Bewegung des mittleren Bauteils zu den äußeren Bauteilen in Grenzen möglich.

Ferner kann die Materialdicke im mittellagigen Bauteil durch eine günstige Wahl des Vorlochs variabel gestaltet werden. Das heißt, je größer das Vorloch im nicht-duktilen Bauteil in der Mittellage ist, desto dicker darf die Materialstärke des mittellagigen Bauteils sein. Die beiden duktilen Bauteile werden durch die Stempelbewegung zueinander gezogen, während das mittellagige Bauteil lediglich geklemmt wird.

Wie bereits zuvor ausgeführt, kann der Setzstempel die mitgezogenen Bereiche der beiden duktilen Bauteile gegen eine Anschlagfläche in der Aussparung pressen, um so eine radiale Ausdehnung der beiden Bereiche zu erlangen. Bevorzugt ist ein Verfahren, bei dem der mitgezogene Bereich des stempelseitigen Bauteils und der mitgezogene Bereich des matrizenseitigen Bauteils gegen eine Anschlagfläche eines Matrizendoms, der in der Aussparung des Amboss angeordnet ist, gepresst wird, wobei die Anschlagfläche dem Setzstempel zugewandt angeordnet ist. Der Matrizendom ist bevorzugt konzentrisch zu der Längsachse der Aussparung an dem Boden der Aussparung angeordnet. Die Anschlagfläche entspricht vorteilhafterweise der Größe und Form der Kontaktfläche des Setzstempels, wobei die Kontaktfläche des Setzstempels die der Matrize zugewandte Stirnseite des Setzstempels ist. Hierdurch können beim Anpressen an die Anschlagfläche ein Teil des mitgezogenen Bereichs des stempelseitigen Bauteils und ein Teil des mitgezogenen Bereichs des matrizenseitigen Bauteils radial nach außen fließen und sich zur Ausbildung einer festen Verbindung gegenseitig hinterschneiden.

Der Matrizendom ist bevorzugt derart ausgebildet und in der Aussparung angeordnet, dass die Anschlagfläche parallel versetzt zu der Anlagefläche des Amboss in der Aussparung angeordnet ist. Hierdurch ist gewährleistet, dass zum Abschluss des Verfahrens beziehungsweise des Clinchvorgangs Teile der beiden mitgezogenen Bereiche der duktilen Bauteile radial nach außen fließen können.

Bevorzugt wird bei dem Verfahren ein Matrizendom verwendet, der konzentrisch zu der Längsachse der Aussparung angeordnet ist, wobei der Matrizendom und die Aussparung eine gleiche Querschnittsform aufweisen und die Querschnittsfläche der Aussparung größer als die Querschnittsfläche des Matrizendoms ist.

Gemäß einer bevorzugten Weiterentwicklung der Erfindung kann bei einem Verfahren vorgesehen sein, dass das stempelseitige Bauteil und/oder das matrizenseitige Bauteil an der dem mittleren Bauteil abgewandten Seite eine Markierung, insbesondere eine Vertiefung, aufweist/aufweisen. Die vorzugsweise kleine Markierung beziehungsweise Vertiefung in den Bauteilen kann bereits im Herstellprozess der Bauteile eingeprägt werden. Dies erleichtert die Lochfindung und stellt sicher, dass die Fügepartner richtig positioniert übereinanderliegen.

Gemäß einer besonders bevorzugten Weiterentwicklung der Erfindung kann bei einem Verfahren vorgesehen sein, dass der Matrizendom zur Anlage an das matrizenseitige Bauteil federnd gelagert ist. So kann der Matrizendom derart federnd gelagert sein, dass er im entspannten Zustand der Feder über den Rand des Amboss herausragt. Hierdurch kann der Matrizendom als Zentrierhilfe dienen, da er leicht an die Markierung, insbesondere in die Vertiefung, angelegt werden kann. Während des Stempels wird der Matrizendom gegen die Federkraft der Feder zurückgedrängt.

Die Matrize kann starr oder beweglich, das heißt mehrteilig, ausgebildet sein.

Gemäß einer bevorzugten Weiterentwicklung der Erfindung kann bei einem Verfahren vorgesehen sein, dass die mitgezogenen Bereiche durch den Setzstempel gegen eine Anschlagfläche in der Aussparung oder an dem Matrizendom, die einen geringeren Durchmesser als die Aussparung und/oder der Hauptkörper des Matrizendoms aufweist, gepresst wird. Hierdurch können Teile der mitgezogenen Bereiche der duktilen Bauteile in einen Ringkanal, der zwischen dem dem Setzstempel zugewandten Ende des Matrizendoms und der Innenmantelfläche der Aussparung des Amboss ausgebildet ist, fließen.

Gemäß einer besonders bevorzugten Weiterentwicklung der Erfindung kann bei einem Verfahren vorgesehen sein, dass zum Verkleben des stempelseitigen Bauteils mit dem mittleren Bauteil Klebstoff zwischen das stempelseitige Bauteil und das mittlere Bauteil und/oder das zum Verkleben des mittleren Bauteils mit dem matrizenseitigen Bauteil Klebstoff zwischen das mittlere und das matrizenseitige Bauteil vor der Bewegung des Setzstempels eingebracht wird. Durch den Klebstoff kann die Verbindungsfestigkeit des Fügeverbundes nochmals erhöht werden. Zusätzlich kann mit Klebstoff an der Fügestelle die Isolation der Fügestelle erhöht werden und externe Medien, wie Wasser oder Luft, können sicher ferngehalten werden. Bei Klebstoff ist das Vorloch im mittleren, nicht-duktilen Bauteil etwas größer zu wählen, um dem Klebstoff Freiraum zur Verdrängung zu bieten, wenn die Bauteile aneinandergelegt beziehungsweise gepresst werden. Der Freiraum kann, muss aber nicht, komplett mit Klebstoff ausgefüllt werden. Durch Verwendung von Klebstoff zwischen den Bauteilen kann die Endverbindungsfestigkeit nochmals erhöht werden. Durch den Klebstoff erfolgt zusätzlich eine Isolierung beziehungsweise Abdichtung der Bauteile zueinander. Die Verbindungsfestigkeit der Bauteile aneinander steigt nach dem Aushärten des Klebstoffs.

Bevorzugt kann bei dem Verfahren ein stufenförmiger Setzstempel oder ein Setzstempel mit einer umlaufenden Nut verwendet werden. Durch derartig ausgebildete Setzstempel kann bei dem Verfahren eine noch bessere Hinterschneidung der beiden duktilen Bauteile erreicht werden. Stufenförmig bedeutet dabei, dass die Querschnittsfläche des Setzstempels zu dessen stirnseitigen Ende abnimmt. Bei einem Setzstempel mit einer umlaufenden Nut ist die Nut etwas beabstandet zu dem stirnseitigen Ende des Setzstempels angeordnet. Dabei ist die Nut radial zur Längsachse des Setzstempels angeordnet.

Das stempelseitige Bauteil und damit der Bauteilverbund können während des Verfahrens, das heißt des Clinchvorgangs, durch einen Niederhalter gegen die Matrize gedrückt werden. Hierdurch ist sichergestellt, dass die Bauteile fest aneinandergefügt werden.

Das Material des stempelseitigen Bauteils und des matrizenseitigen Bauteils ist vorzugsweise Stahl oder Aluminium und das Material des mittleren Bauteils ist vorzugsweise WU-Stahl oder ein Faserverbundwerkstoff, insbesondere ein Faserverbundkunststoff, wie kohlstofffaserverstärkter oder glasfaserverstärkter Kunststoff.

Durch ein derartiges Verfahren zum Clinchen zweier duktiler Bauteile mit einem nicht-duktilen Bauteil kann auf eine einfache und kostengünstige Art und Weise ein fester Bauteilverbund dieser drei Bauteile geschaffen werden und eine Beschädigung beziehungsweise eine Zerstörung des Fügeverbundes, insbesondere des nicht-duktilen Bauteils, vermieden werden. Insbesondere stellt ein derartiges Verfahren ein kostengünstiges Clinchverfahren eines nicht-duktilen Bauteils und zweier duktilen Bauteile dar, da keine Fügehilfselemente zur Befestigung der drei Bauteile aneinander erforderlich sind. Das Vorloch im mittleren Bauteil kann mit einer großen Toleranz gefertigt werden, da das mittlere Bauteil lediglich zwischen den beiden äußeren Bauteilen verklemmt wird. Hierdurch können bei der Fertigung des mittleren Bauteils Kosten gespart werden.

Das Verfahren gewährleistet, dass ein ausreichender Hinterschnitt des matrizenseitigen Bauteils durch das duktile Material des stempelseitigen Bauteils erzeugt werden kann, so dass eine hohe Zugfestigkeit des Fügeverbundes gewährleistet ist.

Das erfindungsgemäße Verfahren und eine Vorrichtung zur Durchführung des Verfahrens werden nachfolgend anhand von Zeichnungen näher erläutert. Es zeigen jeweils schematisch:
- Figur 1: in einer Explosionsdarstellung ein stempelseitiges duktiles Bauteil und ein matrizenseitiges duktiles Bauteil sowie ein mittleres nicht-duktiles Bauteil, welche durch ein erfindungsgemäßes Verfahren zum Clinchen miteinander verclincht werden,
- Figur 2: in einer Schnittdarstellung ein stempelseitiges duktiles Bauteil und ein matrizenseitiges duktiles Bauteil sowie ein mittleres nicht-duktiles Bauteil, welche durch ein erfindungsgemäßes Verfahren zum Clinchen miteinander verclincht worden sind,
- Figur 3: in einer Schnittdarstellung ein stufenförmiger Setzstempel, und
- Figur 4: in einer Schnittdarstellung die drei Bauteile gemäß Fig. 1 zum Ende eines Clinchvorgangs.

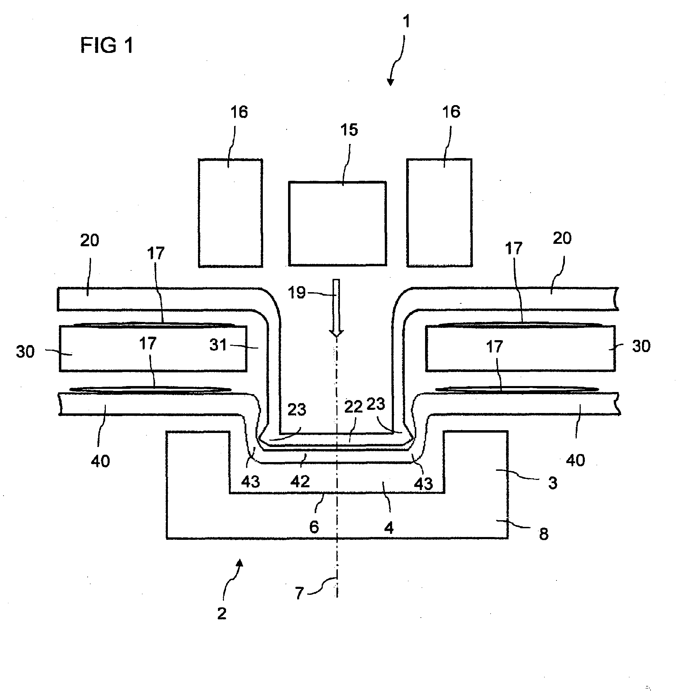

Elemente mit gleicher Funktion und Wirkungsweise sind in den Fig. 1 bis 4 jeweils mit denselben Bezugszeichen versehen.

In Fig. 1 sind in einer Explosionsdarstellung ein stempelseitiges Bauteil 20 und ein matrizenseitiges Bauteil 40, welche jeweils aus einem duktilen Material, beispielsweise aus Stahl oder Aluminium, ausgebildet sind, sowie ein mittleres Bauteil 30, welches aus einem nicht-duktilen Material, beispielsweise aus WU-Stahl, wie beispielsweise HC1000W, oder einem Faserverbundwerkstoff, wie Faserverbundkunststoff, insbesondere kohlstofffaserverstärktem oder glasfaserverstärktem Kunststoff, ausgebildet ist, dargestellt. Ferner ist eine Vorrichtung 1 durch Durchführung des Verfahrens zum Clinchen der drei Bauteile 20, 30, 40 dargestellt. Die Vorrichtung 1 zum Clinchen weist eine Matrize 2 auf, die einen Amboss 3 zum Anlegen des matrizenseitigen Bauteils 40 sowie eine Aussparung 4 zum Aufnehmen eines Setzstempels 15 der Vorrichtung 1 aufweist. Der Amboss 2, die Aussparung 4 sowie der Setzstempel 15 sind vorzugsweise kreiszylinderförmig ausgebildet, wobei der Setzstempel 15 koaxial zur Längsachse 7 der Aussparung 4 bewegt werden kann. Die Vorrichtung 1 zum Clinchen weist ferner einen oder zwei Niederhalter 16 auf, die während des Clinchvorgangs das stempelseitige Bauteil 20 gegen die anderen Bauteile 30, 40 drückt. Vorzugsweise ist ein umlaufender, insbesondere torusartiger, Niederhalter 16 vorgesehen. Damit zum Abschluss des Clinchvorgangs eine besonders hohe Verbindungsfestigkeit zwischen den drei Bauteilen 20, 30, 40 erreicht werden kann, wird vor Beginn des Clinchvorgangs zwischen dem stempelseitigen Bauteil 20 und dem mittleren Bauteil 30 sowie zwischen dem mittleren Bauteil 30 und dem matrizenseitigen Bauteil 40 jeweils Klebstoff 17 aufgebracht. Das Einbringen von Klebstoff ist jedoch nicht zwingend erforderlich. Das mittlere Bauteil 30 wird zwischen das stempelseitige Bauteil 20 und das matrizenseitige Bauteil 40 angeordnet. Ein Bereich 22 des stempelseitigen Bauteils 20 wird zu Anfang des Clinchvorgangs von dem Setzstempel 15 mitgezogen und in das Vorloch 31 des mittleren Bauteils 30 eingeführt. Das heißt, der Setzstempel 15 wird in Richtung 19 des matrizenseitigen Bauteils 40 bewegt und zieht dabei einen Bereich 22 des stempelseitigen Bauteils 20 durch das Vorloch 31 des mittleren Bauteils 30 bis der mitgezogene Bereich 22 gegen das matrizenseitige Bauteil 40 gepresst wird. Anschließend wird der Setzstempel 15 weiter in Richtung 19 der Aussparung 4 des Amboss 3 bewegt und zieht dabei den Bereich 22 des stempelseitigen Bauteils 20 sowie einen Bereich 42 des matrizenseitigen Bauteils 40 in die Aussparung 4 des Amboss 3 bis die mitgezogenen Bereiche 22, 42 durch den Setzstempel 15 an eine Anschlagfläche 6 in der Aussparung 4 gepresst werden. Die Matrize 2 und damit die Anschlagfläche 6 sind unbeweglich zu den Bauteilen 20, 30, 40 angeordnet. Der Setzstempel 15 drückt die mitgezogenen Bereiche 22, 42 weiter so lange gegen die Anschlagfläche 6 bis ein Teil 23 des mitgezogenen Bereichs 22 des stempelseitigen Bauteils 20 und ein Teil 43 des mitgezogenen Bereichs 42 des matrizenseitigen Bauteils 40 aufgrund des Anpressens an die Anschlagfläche 6 radial nach außen gedrückt werden beziehungsweise fließen, bis der Teil 23 des mitgezogenen Bereichs 22 des stempelseitigen Bauteils 20 das matrizenseitige Bauteil 40 hinterschneidet.

Das heißt, der Setzstempel wird derartig weit in Richtung 19 der Anschlagfläche 6 bewegt, bis die mitgezogenen Bereiche 22, 42 der duktilen Bauteil 20, 40 zum Abschluss des Clinchvorgangs von dem Setzstempel 15 so gegen die Anschlagfläche 6 der Matrize 2 gedrückt werden, so dass ein Teil 23 des Bereichs 22 des duktilen Materials des stempelseitigen Bauteils 20 und ein Teil 43 des Bereichs 42 des duktilen Materials des matrizenseitigen Bauteils 40 nach außen fließen und dadurch eine Kraft- und Formschluss miteinander eingehen. Das mittlere Bauteil 30 wird dabei zwischen den beiden äußeren Bauteilen 20, 40 verklemmt.

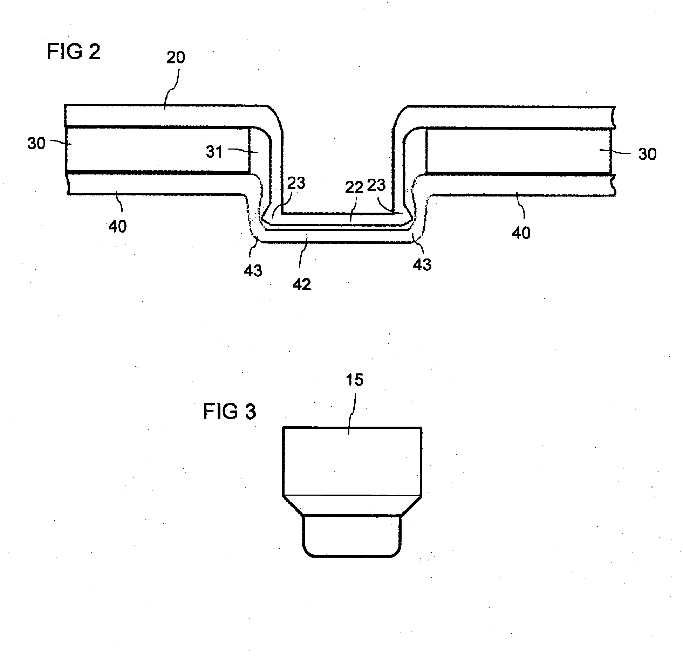

In Fig. 2 sind schematisch in einer Schnittdarstellung ein stempelseitiges duktiles Bauteil 20 und ein matrizenseitiges duktiles Bauteil 40 sowie ein mittleres nicht-duktiles Bauteil 30 dargestellt, welche durch ein erfindungsgemäßes Verfahren zum Clinchen miteinander verclincht worden sind. Das stempelseitige Bauteil 20, welches aus einem duktilen Material, insbesondere aus Stahl oder Aluminium, ausgebildet ist, liegt fest verbunden an dem mittleren Bauteil 30, welches aus einem nicht-duktilen Material, insbesondere aus WU-Stahl, wie beispielsweise HC1000W, oder einem Faserverbundwerkstoff, wie Faserverbundkunststoff, insbesondere kohlstofffaserverstärktem oder glasfaserverstärktem Kunststoff, ausgebildet ist, an. Das mittlere Bauteil 30 liegt wiederum an dem matrizenseitigen Bauteil 30, welches ebenfalls aus einem duktilen Material, insbesondere aus Stahl oder Aluminium, ausgebildet ist, an. Die drei Bauteile 20, 30, 40 sind durch ein erfindungsgemäßes Verfahren miteinander verclincht worden. Dabei ist ein Fügeverbund beziehungsweise Bauteilverbund entstanden. Die drei Bauteile 20, 30, 40 sind kraft- und formschlüssig miteinander verbunden. Ein Bereich 22 des stempelseitigen Bauteils 20 ist durch das Vorloch 31 des mittleren 30 hindurchgezogen worden und ein Teil 23 des Bereiches 22 hintergreift das matrizenseitige Bauteil 40. Das mittlere Bauteil 30 ist zwischen dem matrizenseitigen Bauteil 40 und dem stempelseitigen Bauteil 20 verklemmt worden. Ist zwischen den Bauteilen 20, 30, 40 zusätzlich Klebstoff 17 angeordnet, ist die Verbindungsfestigkeit zwischen den Bauteilen 20, 30, 40 nochmals erhöht.

Fig. 3 zeigt in einer Schnittdarstellung einen stufenförmigen Setzstempel 15, der bei einem erfindungsgemäßen Verfahren verwendet werden kann. Durch einen derartig ausgebildeten Setzstempel 15 kann bei dem Verfahren eine noch bessere Hinterschneidung der beiden duktilen Bauteile 20, 40 erreicht werden. Beim Anpressen an die Anschlagfläche 6 können bei einem derartig ausgebildeten Setzstempel 15 die Teile 23, 43 der Bereiche 22, 42 der duktilen Bauteile 20, 40 besonders einfach s-förmig ausgeformt werden, so dass diese sich formschlüssig hinterschneiden. Hierdurch kann eine besonders hohe Verbindungsfestigkeit zwischen den drei Bauteilen 20, 30, 40 erreicht werden.

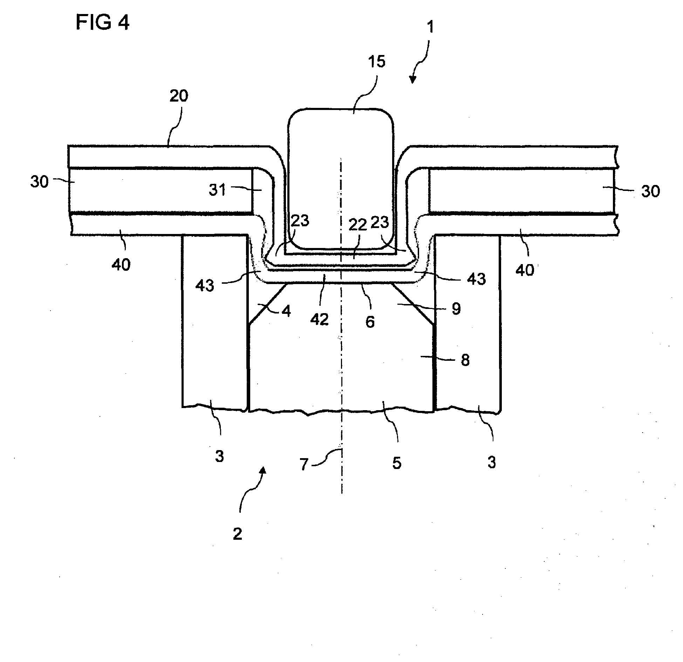

Fig. 4 zeigt schematisch in einer Schnittdarstellung die drei Bauteile 20, 30, 40 zum Ende eines Clinchvorgangs. Der Setzstempel 15 der Vorrichtung 1 hat bei seiner Durchführung durch das Vorloch 31 des mittleren Bauteils 30 einen Bereich 21 des stempelseitigen Bauteils 20 durch das Vorloch 31 gezogen, ohne dass das duktile Material des stempelseitigen Bauteils 20 gerissen ist. Der Bereich 21 des stempelseitigen Bauteils 20 ist durch den Setzstempel 15 gegen das matrizenseitige Bauteil 40 gepresst worden, bis ein Bereich 42 des matrizenseitigen Bauteils 40 ebenfalls von dem Setzstempel 15 in Richtung 19 der Aussparung 4 des Amboss 3 mitgezogen wurde. Die mitgezogenen Bereiche 22, 42 der beiden duktilen Bauteile 20, 40 sind gegen die Anschlagfläche 6, die an dem dem Setzstempel 15 zugewandten Ende 9 eines Matrizendoms 5 angeordnet ist, gepresst worden. Der Matrizendom 5 ist konzentrisch zu der Längsachse 7 der Aussparung 4 angeordnet. Der Matrizendom 5 und die Aussparung 4 weisen eine gleiche Querschnittsform auf, wobei die Querschnittsfläche der Aussparung 4 etwas größer als die Querschnittsfläche der Anschlagfläche 6 des Matrizendoms 5 ist.

Das dem Setzstempel 15 zugewandte Ende 9 des Matrizendoms 5 ist kegelstumpfförmig ausgebildet. Die Form des Ringkanals 11 richtet sich nach der Matrizenbauform. Das kegelstumpfförmig ausgebildete Ende 9 des Matrizendoms 5 grenzt an den Grundkörper 8 des Matrizendoms 5 an. Durch die kegelstumpfförmige Ausbildung des Endes 9 des Matrizendoms 5 weist die Anschlagfläche 6 des Matrizendoms 5 eine geringere Querschnittsfläche als der Hauptkörper 8 des Matrizendoms 5 auf. Durch die kegelstumpfförmige Ausbildung des Endes 9 des Matrizendoms 5 ist ein Ringkanal 11 zwischen dem kegelstumpfförmig ausgebildeten Ende 9 des Matrizendoms 5 und der Innenmantelfläche der Aussparung 4 ausgebildet. In diesen Ringkanal 11 kann zumindest ein Teil 43 des Bereichs 42 des matrizenseitigen Bauteils 40 hinfließen.

Durch ein derartiges Verfahren ist es auf eine einfache und kostengünstige Art und Weise möglich, ein stempelseitiges Bauteil 20 und ein matrizenseitiges Bauteil 40, die jeweils aus einem duktilen Material ausgebildet sind, mit einem Bauteil 30, das aus einem nicht-duktilen Material ausgebildet ist und zwischen den beiden anderen Bauteilen 20, 40 angeordnet wird, dauerhaft feste miteinander zu verbinden. Durch die sandwichmäßige Anordnung des nicht-duktilen Bauteils 30 zwischen den beiden duktilen Bauteilen 20, 40 kann eine Beschädigung beziehungsweise eine Zerstörung des nicht-duktilen Bauteils 30 bei dem Clinchverfahren vermieden werden.

### Bezugszeichenliste

- 1: Vorrichtung zum Clinchen
- 2: Matrize
- 3: Amboss
- 4: Aussparung
- 5: Matrizendom
- 6: Anschlagfläche
- 7: Längsachse der Aussparung
- 8: Hauptkörper
- 9: das dem Setzstempel zugewandte Ende des Matrizendoms
- 11: Ringkanal

- 15: Setzstempel
- 16: Niederhalter
- 17: Klebstoff
- 19: Bewegrichtung des Setzstempels

- 20: stempelseitiges duktiles Bauteil
- 22: Bereich des stempelseitigen Bauteils
- 23: Teil des Bereich des stempelseitigen Bauteils

- 30: mittleres nicht-duktiles Bauteil
- 31: Vorloch im mittleren Bauteil

- 40: matrizenseitiges nicht-duktiles Bauteil
- 42: Bereich des matrizenseitiges Bauteils
- 43: Teil des Bereich des matrizenseitiges Bauteils

## Patentansprüche

1. Verfahren zum Clinchen von drei Bauteilen (20, 30, 40) mittels einer Clinchvorrichtung (1), aufweisend einen Setzstempel (15) und eine Matrize (2), die einen Amboss (3) mit einer Aussparung (4), in die der Setzstempel (15) eingeführt werden kann, aufweist, wobei das stempelseitige Bauteil (20) und das matrizenseitige Bauteil (40) jeweils ein duktiles Material und das mittlere Bauteil (30) ein nicht-duktiles Material aufweisen, wobei das mittlere Bauteil (30) ein Vorloch (31) aufweist, durch das der Setzstempel (15) hindurchgeführt werden kann,
wobei das Verfahren durch folgende Verfahrensschritte gekennzeichnet ist:
- die drei Bauteile (20, 30, 40) werden aneinandergelegt, wobei das mittlere Bauteil (30) zwischen dem stempelseitigen Bauteil (20) und dem matrizenseitigen Bauteil (40) angeordnet wird,
- der Setzstempel (15) der Vorrichtung (1) wird in Richtung (19) des matrizenseitigen Bauteils (40) bewegt und zieht einen Bereich (22) des stempelseitigen Bauteils (20) durch das Vorloch (31) des mittleren Bauteils (30) bis der mitgezogene Bereich (22) gegen das matrizenseitige Bauteil (40) gepresst wird,
- der Setzstempel (15) wird weiter in Richtung (19) der Aussparung (4) des Amboss (3) bewegt und zieht den Bereich (22) des stempelseitigen Bauteils (20) sowie einen Bereich (42) des matrizenseitigen Bauteils (40) in die Aussparung (4) bis die mitgezogenen Bereiche (22, 42) durch den Setzstempel (15) an eine Anschlagfläche (6) in der Aussparung (4) des Amboss (3) gepresst werden und ein Teil (23) des mitgezogenen Bereichs (22) des stempelseitigen Bauteils (20) und ein Teil (43) des mitgezogenen Bereichs (42) des matrizenseitigen Bauteils (40) aufgrund des Anpressens an die Anschlagfläche (6) radial nach außen gedrückt werden, bis der Teil (23) des mitgezogenen Bereichs (22) des stempelseitigen Bauteils (20) das matrizenseitige Bauteil (40) hinterschneidet.

2. Verfahren (1) nach Anspruch 1, **dadurch gekennzeichnet, dass** die Aussparung (4) des Amboss (3) und das Vorloch (31) des mittleren Bauteils (30) kreiszylinderförmig ausgebildet sind.

3. Verfahren (1) nach wenigstens einem der vorangegangenen Ansprüche, **dadurch gekennzeichnet, dass** der mitgezogene Bereich (22) des stempelseitigen Bauteils (20) und der mitgezogene Bereich (42) des matrizenseitigen Bauteils (40) gegen eine Anschlagfläche (6) eines Matrizendoms (5), der in der Aussparung (4) des Amboss (3) angeordnet ist, gepresst wird, wobei die Anschlagfläche (6) dem Setzstempel (15) zugewandt angeordnet ist.

4. Verfahren (1) nach Anspruch 3, **dadurch gekennzeichnet, dass** der Matrizendom (5) konzentrisch zu der Längsachse (7) der Aussparung (4) angeordnet ist, dass der Matrizendom (5) und die Aussparung (4) eine gleiche Querschnittform aufweisen und dass die Querschnittsfläche der Aussparung (4) größer als die Querschnittsfläche des Matrizendoms (5) ist.

5. Verfahren (1) nach wenigstens einem der vorangegangenen Ansprüche, **dadurch gekennzeichnet, dass** das stempelseitige Bauteil (20) und/oder das matrizenseitige Bauteil (40) an der dem mittleren Bauteil (30) abgewandten Seite eine Markierung, insbesondere eine Vertiefung, aufweist/aufweisen.

6. Verfahren (1) nach wenigstens einem der vorangegangenen Ansprüche 3 bis 5, **dadurch gekennzeichnet, dass** der Matrizendom (5) zur Anlage an das matrizenseitige Bauteil (40) federnd gelagert ist.

7. Verfahren (1) nach wenigstens einem der vorangegangenen Ansprüche, **dadurch gekennzeichnet, dass** die mitgezogenen Bereiche (22 42) durch den Setzstempel (15) gegen eine Anschlagfläche (6) in der Aussparung (4) oder an dem Matrizendom (5), die einen geringeren Durchmesser als die Aussparung (4) und/oder der Hauptkörper des Matrizendoms (5) aufweist, gepresst wird.

8. Verfahren (1) nach wenigstens einem der vorangegangenen Ansprüche, **dadurch gekennzeichnet, dass** zum Verkleben des stempelseitigen Bauteils (20) mit dem mittleren Bauteil (30) Klebstoff zwischen das stempelseitige Bauteil (20) und das mittlere Bauteil (30) und/oder das zum Verkleben des mittleren Bauteils (30) mit dem matrizenseitigen Bauteil (40) Klebstoff zwischen das mittlere und das matrizenseitige Bauteil (40) vor der Bewegung des Setzstempels (15) eingebracht wird.

9. Verfahren (1) nach wenigstens einem der vorangegangenen Ansprüche, **dadurch gekennzeichnet, dass** ein stufenförmigen Setzstempel (15) verwendet wird.

10. Verfahren (1) nach wenigstens einem der vorangegangenen Ansprüche, **dadurch gekennzeichnet, dass** ein Setzstempel (15) mit einer umlaufenden Nut (18) verwendet wird.

## Claims

1. A method of clinching three components (20, 30, 40) using a clinching tool (1) comprising a set, hammer (15) and a die (2) having an anvil (3) with a recess (4) into which the set hammer (15) can be inserted, wherein the component (20) on the hammer side and the component (40) on the die side each contain a ductile material and the middle component (30) contains a non-ductile material, wherein the middle component (30) has a prepunch hole through which the set hammer (15) can be inserted,
wherein the method is **characterised by** the following steps:
- the three components (20, 30, 40) are laid on each other, wherein the middle component (30) is disposed between the component (20) on the hammer side and the component (40) on the die side,
- the set hammer (15) of the device (1) is moved in the direction (19) towards the die-side component (40) and pulls a region (22) of the hammer-side component (20) through the hole (31) in the middle component (30) until the entrained region (22) is pressed against the die-side component (40),
- the set hammer (15) is moved further in the direction (19) towards the recess (4) in the anvil (3) and pulls the region (22) of the hammer-side component (20) and a region (42) of the die-side component (40) into the recess (4) until the entrained regions (22, 42) are pressed by the set hammer (15) against an abutment surface (6) in the recess (4) in the anvil (3) and a part (23) of the entrained region (22) of the hammer-side component (20) and a part (43) of the entrained region (42) of the die-side component (40) are pressed radially outwards by pressure on the abutment surface (6) until the part (23) of the entrained region (22) of the hammer-side component (20) undercuts the die-side component (40).

2. A method (1) according to claim 1, **characterised in that** the recess (4) in the anvil (3) and the hole (31) in the middle component (30) are circular-cylindrical-shaped.

3. A method (1) according to at least one of the preceding claims, **characterised in that** the entrained region (22) of the hammer-side component (20) and the entrained region (42) of the die-side component (40) are pressed against an abutment surface (6) on a mandrel (5) in the die, disposed in the recess (4) of the anvil (3), wherein the abutment surface (6) is disposed facing the set hammer (15).

4. A method (1) according to claim 3, **characterised in that** the mandrel (5) is disposed concentric with the longitudinal axis (7) of the recess (4), the mandrel (5) and the recess (4) have the same cross-sectional shape and the cross-sectional area of the recess (4) is greater than the cross-sectional area of the mandrel (5).

5. A method (1) according to at least one of the preceding claims, **characterised in that** the hammer-side component (20) and/or the die-side component (40) have a mark, particularly an indentation, on the side remote from the middle component (30).

6. A method (1) according to at least one of the preceding claims 3 to 5, **characterised in that** the mandrel (5) is spring-mounted in order to abut the die-side component (40).

7. A method (1) according to at least one of the preceding claims, **characterised in that** the entrained regions (22, 42) are pressed by the set hammer (15) against an abutment surface (6) in the recess (4) or on the mandrel (5), the surface having a smaller diameter than the recess (4) and/or the main body of the mandrel (5).

8. A method (1) according to at least one of the preceding claims, **characterised in that** in order to adhere the hammer-side component (20) to the middle component (30), adhesive is inserted between the hammer-side component (20) and the middle component (30) and/or the adhesive for adhering the middle component (30) to the die-side component (40) is inserted between the middle component and the die-side component (40) before moving the set hammer (15).

9. A method (1) according to at least one of the preceding claims, **characterised in that** a stepped set hammer (15) is used.

10. A method (1) according to at least one of the preceding claims, **characterised in that** a set hammer (15) with a peripheral groove (18) is used.

## Revendications

1. Procédé de clinchage de trois éléments (20, 30, 40) au moyen d'un dispositif de clinchage (1) comprenant un poinçon d'emboutissage (15) et une matrice (2) qui comporte une enclume (3) munie d'un évidement (4) dans lequel le poinçon (15) peut être introduit, l'élément (20) situé côté poinçon et l'élément (40) situé côté matrice renfermant chacun un matériau ductile tandis que l'élément médian (30) renferme un matériau non ductile, l'élément médian (30) comportant un perçage préliminaire (31) au travers duquel le poinçon (15) peut être introduit, ce procédé étant **caractérisé par** les étapes suivantes :
- les trois éléments (20, 30, 40) sont superposés, l'élément médian (30) étant positionné entre l'élément (20) situé côté poinçon et l'élément (40) situé côté matrice,
- le poinçon (15) du dispositif (1) est déplacé dans la direction (19) de l'élément (40) situé côté matrice, et étire une zone (22) de l'élément (20) situé côté poinçon au travers du perçage préliminaire (31) de l'élément médian (30) jusqu'à ce que la zone entrainée (22) soit comprimée contre l'élément (40) situé côté matrice,
- le poinçon (15) poursuit son déplacement dans la direction (19) de l'évidement (4) de l'enclume (3) et étire la zone (22) de l'élément (20) situé côté poinçon ainsi qu'une zone (42) de l'élément (40) situé côté matrice dans l'évidement (4) jusqu'à ce que les zones (22, 42) étirées conjointement soient comprimées par le poinçon (15) contre une surface de butée (6) dans l'évidement (4) de l'enclume (3), et une partie (23) de la zone entrainée (22) de l'élément (20) situé côté poinçon, et une partie (43) de la zone entrainée (42) de l'élément (40) situé côté matrice sont comprimées radialement vers l'extérieur du fait de la compression contre la surface de butée (6) jusqu'à ce que la partie (23) de la zone entrainée (22) de l'élément (20) situé côté poinçon vienne en contre-dépouille sur l'élément (40) situé côté matrice.

2. Procédé (1) conforme à la revendication 1,
**caractérisé en ce que**
l'évidement (4) de l'enclume (3) et le perçage préliminaire (31) de l'élément médian (30) sont réalisés en forme de cylindre circulaire.

3. Procédé (1) conforme à au moins l'une des revendications précédentes,
**caractérisé en ce que**
la zone entrainée (22) de l'élément (20) situé côté poinçon et la zone entrainée (42) de l'élément (40) situé côté matrice sont comprimées contre une surface de butée (6) d'un dôme (5) de la matrice qui est positionnée dans l'évidement (4) de l'enclume (3), la surface de butée (6) étant tournée vers le poinçon (15).

4. Procédé (1) conforme à la revendication 3,
**caractérisé en ce que**
le dôme (5) de la matrice est positionné concentriquement à l'axe longitudinal (7) de l'évidement (4), le dôme de la matrice (5) et l'évidement (4) ont une section de même forme et la section de l'évidement (4) est supérieure à la section du dôme (5) de la matrice.

5. Procédé (1) conforme à au moins l'une des revendications précédentes,
**caractérisé en ce que**
l'élément (20) situé côté poinçon et/ou l'élément (40) situé côté matrice présente(nt) sur leur face située à l'opposé de l'élément médian (30) un marquage, en particulier un marquage en creux.

6. Procédé (1) conforme à au moins l'une des revendications 3 à 5,
**caractérisé en ce que**
le dôme (5) de la matrice est logé élastiquement pour venir en appui contre l'élément (40) situé côté matrice.

7. Procédé (1) conforme à au moins l'une des revendications précédentes,
**caractérisé en ce que**
les zones entrainées (22, 42) sont comprimées par la poinçon (15) contre une surface de butée (6) dans l'évidement (4) ou sur le dôme (5) de la matrice qui a un diamètre inférieur à celui de l'évidement (4), et/ou du corps principal du dôme (5) de la matrice.

8. Procédé (1) conforme à au moins l'une des revendications précédentes,
**caractérisé en ce que**
pour permettre de faire adhérer l'élément (20) situé côté poinçon et l'élément médian (30) un adhésif est appliqué entre l'élément (20) situé côté poinçon et l'élément médian (30), et/ou pour faire adhérer l'élément médian (30) et l'élément (40) situé côté matrice un adhésif est appliqué entre l'élément médian et l'élément (40) situé côté matrice avant le déplacement du poinçon (15).

9. Procédé (1) conforme à au moins l'une des revendications précédentes,
**caractérisé en ce que**
l'on utilise un poinçon (15) à gradins.

10. Procédé (1) conforme à au moins l'une des revendications précédentes,
**caractérisé en ce que**
l'on utilise un poinçon (15) ayant une rainure périphérique (18).
